# EUROPÄISCHE PATENTANMELDUNG

(11) **EP 1 914 153 A1**
(43) Veröffentlichungstag der Anmeldung: **23.04.2008**
(21) Anmeldenummer: 07020598.4
(22) Anmeldetag: 19.10.2007
(51) Int. Cl.: B62D 25/24, B60J 10/00

(54) **Verfahren zum Abdichten einer Öffnung in einem Bauteil**

(30) Priorität: 20.10.2006 DE 102006049609
(71) Anmelder: TRW Automotive Electronics & Components GmbH, 78315 Radolfzell (DE)
(72) Erfinder: Jatzke, Stefan, 67280 Ebertsheim (DE)
(74) Vertreter: Strass, Jürgen

(57) **Zusammenfassung**

Bei einem Verfahren zum Abdichten einer Öffnung in einem Bauteil (18) wird ein Dichtstopfen (10) in einer Gebrauchsform hergestellt, die eine ausreichende Dichtheit gewährleistet. Der Dichtstopfen (10) wird thermisch behandelt, so daß der Dichtstopfen (10) eine von der Gebrauchsform abweichende Montageform annimmt. Der Dichtstopfen wird in die Öffnung eingesetzt und erneut thermisch behandelt, so daß der Dichtstopfen (10) in der Öffnung wieder die Gebrauchsform annimmt.

## Beschreibung

Die Erfindung betrifft ein Verfahren zum Abdichten einer Öffnung in einem Bauteil.

Im Automotive-Bereich ist es bei der Fahrzeugmontage erforderlich, Durchbrüche in der Karosserie abzudichten. Hierzu werden Dichtstopfen verwendet, die nach der Montage gewisse Qualitätsanforderungen bezüglich Dichtheit und Festsitz erfüllen müssen. Diese Anforderungen laufen aber konträr zu einer leichten Montage der Dichtstopfen. Optimale Dichtheit und Festsitz lassen sich in der Regel nur durch einen ausgeprägten Preßsitz des Dichtstopfens erreichen, der jedoch das Einsetzen des Dichtstopfens in den Karosseriedurchbruch erschwert. Umgekehrt bieten leicht zu montierende Dichtstopfen meist nur eingeschränkte(n) Dichtheit und/oder Festsitz. In jedem Fall erfordert ein qualitativ hochwertiges Abdichten der Karosseriedurchbrüche einen Aufwand, dessen Reduzierung wünschenswert ist.

Die Erfindung schafft ein Verfahren zum Abdichten einer Öffnung in einem Bauteil, das die oben geschilderte Kontradiktion auf kostengünstige Weise löst.

Die Erfindung sieht hierzu ein Verfahren nach Anspruch 1 oder nach Anspruch 4 vor. Die Erfindung beruht auf der Erkenntnis, daß eine Umformung des Dichtstopfens während des Montageprozesses mit vertretbarem Aufwand möglich ist und zu einer erheblichen Erleichterung der Montage führt, wobei der Dichtstopfen in seiner Gebrauchsform dann die gestellten Anforderungen an Dichtheit und Festsitz zuverlässig erfüllt. Aufgrund der erfindungsgemäßen Umformung des Dichtstopfens muß kein Kompromiß mehr zwischen Montagefreundlichkeit und hohem Qualitätsstandard der Abdichtung eingegangen werden.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figuren 1 a, 1 b perspektivische Ansichten eines Dichtstopfens;
- Figur 2 eine perspektivische Schnittansicht des Dichtstopfens;
- Figuren 3a, 3b eine Vorder- bzw. Rückansicht des eingesetzten Dichtstopfens in seiner Montageform; und
- Figuren 4a, 4b, 4c eine Vorder-, Rück- bzw. Seitenansicht des eingesetzten Dichtstopfens in seiner Gebrauchsform.

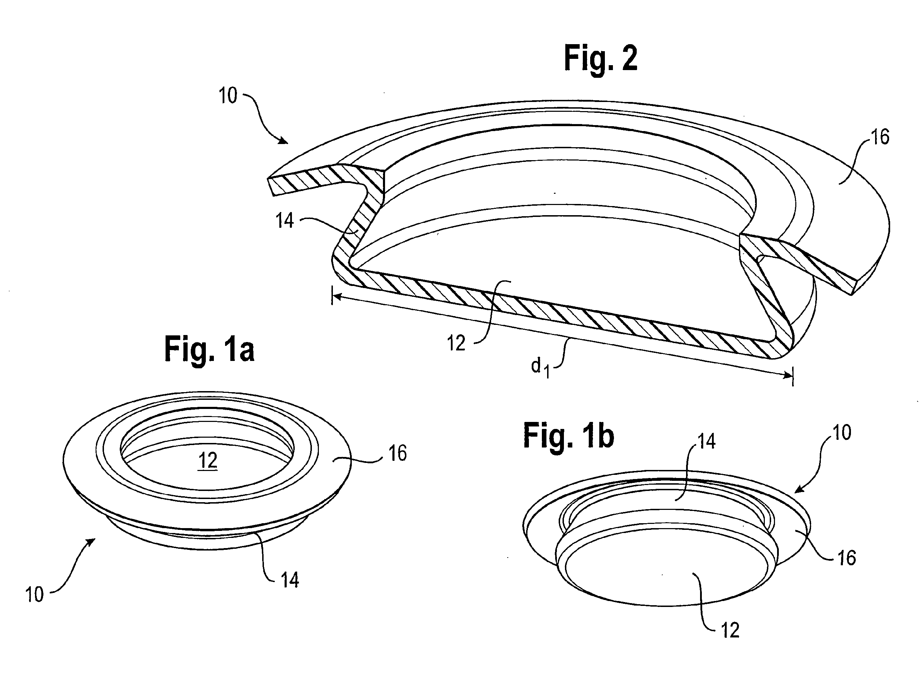

In den Figuren 1 und 2 ist ein Dichtstopfen 10 aus Kunststoff in einer Form gezeigt, die im folgenden als Gebrauchsform bezeichnet wird. Der Dichtstopfen 10 weist einen ebenen Boden 12 mit einem Durchmesser d₁, einen sich vom Boden 12 erstreckenden, kegelstumpfartig verjüngenden Mittelabschnitt 14 und einen leicht in Richtung Boden 12 geneigten Kragen 16 auf.

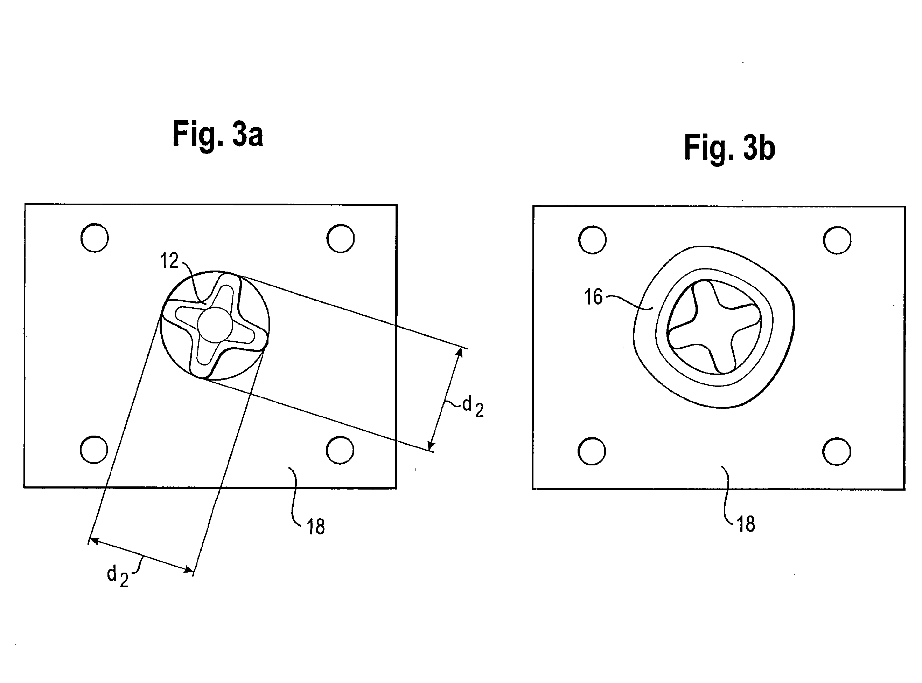

Der Dichtstopfen 10 soll bei der Fahrzeugmontage von einem Monteur mit dem Boden 12 voran in einen Durchbruch (Öffnung) einer Fahrzeugkarosserie 18 eingesetzt werden, um die Öffnung zuverlässig abzudichten. Vor dem Einsetzen in die Öffnung wird der Dichtstopfen 10 thermisch behandelt, genauer gesagt erhitzt. Dabei nimmt der Dichtstopfen 10 eine Montageform an, die in den Figuren 3a und 3b zu erkennen ist. Die Montageform weicht von der Gebrauchsform insbesondere bezüglich des Bodens 12 und des Mittelabschnitts 14 ab. Der Boden 12 zeigt beim dargestellten Ausführungsbeispiel eine deutliche kreuzförmige Auswölbung, und der Durchmesser des Bodens 12 hat sich auf einen Wert d₂ < d₁ verringert. Aber auch der Kragen 16 ist entsprechend der kreuzförmigen Auswölbung des Bodens 12 nicht mehr kreisrund. In dieser Montageform läßt sich der Dichtstopfen 10 im Vergleich zur Gebrauchsform wesentlich leichter in die Öffnung der Fahrzeugkarosserie 18 einsetzen. Allerdings erfüllt der Dichtstopfen 10 in der Montageform nicht die gestellten Qualitätsanforderungen bezüglich Dichtheit und Festsitz.

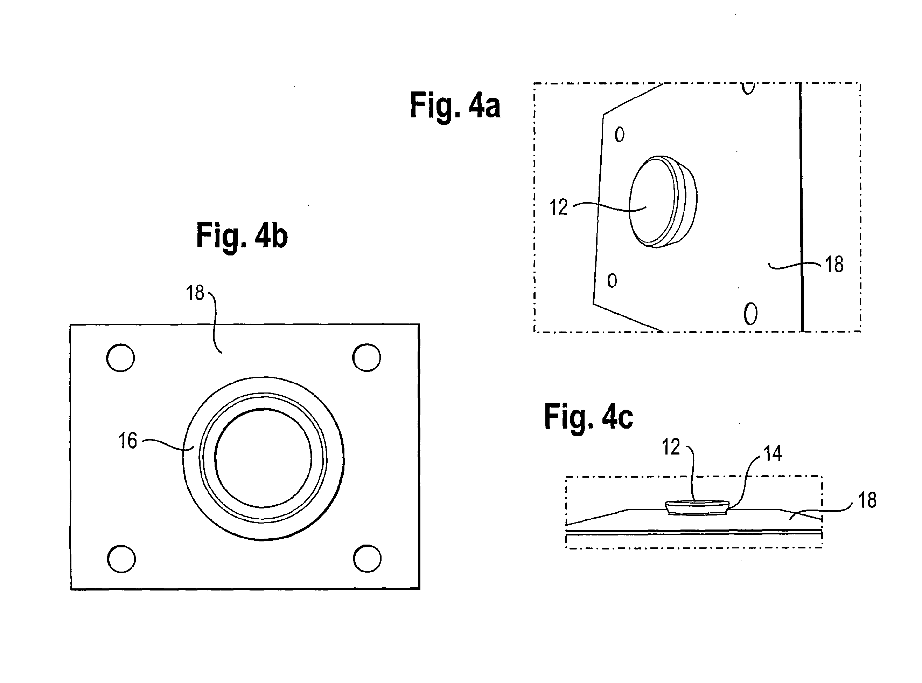

Der Dichtstopfen 10 wird deshalb wieder in seine ursprüngliche Gebrauchsform überführt. Dazu wird der Dichtstopfen 10 erneut in einem Ofen oder mit einem Heißluftgebläse für ca. 10 Minuten auf 180° erhitzt. Nach dieser thermischen Behandlung weist der Dichtstopfen 10 in der Öffnung im wesentlichen wieder die in den Figuren 1 und 2 gezeigte Form auf (siehe Figuren 4a, 4b, 4c). Der Durchmesser des Bodens 12 entspricht ungefähr dem ursprünglichen Wert d₁. Im montierten Zustand nimmt der Dichtstopfen 10 also wieder seine Gebrauchsform ein, die eine ausreichende Dichtheit und einen ausreichenden Festsitz des Dichtstopfens 10 in der Öffnung der Fahrzeugkarosserie 18 gewährleistet.

## Patentansprüche

1. Verfahren zum Abdichten einer Öffnung in einem Bauteil (18) mit folgenden Schritten:
- Bereitstellen eines Dichtstopfens (10), der eine für das Einsetzen des Dichtstopfens (10) in die Öffnung geeignete Montageform hat,
- Einsetzen des Dichtstopfens (10) in die Öffnung, und
- thermisches Behandeln des Dichtstopfens (10), so daß der Dichtstopfen (10) in der Öffnung eine von der Montageform abweichende Gebrauchsform annimmt, die eine ausreichende Dichtheit gewährleistet.

2. Verfahren nach Anspruch 1, **dadurch gekennzeichnet, daß** der Dichtstopfen (10) in der Gebrauchsform hergestellt wird.

3. Verfahren nach Anspruch 2, **dadurch gekennzeichnet, daß** der Dichtstopfen (10) vor dem Einsetzen in die Öffnung thermisch behandelt wird, so daß der Dichtstopfen (10) eine von der Gebrauchsform abweichende Montageform annimmt.

4. Verfahren zum Abdichten einer Öffnung in einem Bauteil (18) mit folgenden Schritten:
- Herstellen eines Dichtstopfens (10) in einer Gebrauchsform, die eine ausreichende Dichtheit gewährleistet,
- thermische Behandlung des Dichtstopfens (10), so daß der Dichtstopfen (10) eine von der Gebrauchsform abweichende Montageform annimmt,
- Einsetzen des Dichtstopfens (10) in die Öffnung, und
- erneute thermische Behandlung des Dichtstopfens (10), so daß der Dichtstopfen (10) in der Öffnung im wesentlichen wieder die Gebrauchsform annimmt.

5. Verfahren nach einem der vorhergehenden Ansprüche, **dadurch gekennzeichnet, daß** der Dichtstopfen (10) in einem Ofen thermisch behandelt wird.

6. Verfahren nach einem der Ansprüche 1 bis 4, **dadurch gekennzeichnet, daß** der Dichtstopfen (10) mit einem Heißluftgebläse thermisch behandelt wird.

7. Verfahren nach einem der vorhergehenden Ansprüche, **dadurch gekennzeichnet, daß** wenigstens ein Abschnitt des Dichtstopfens (10) in der Montageform einen geringeren Durchmesser als in der Gebrauchsform hat.
